# FASCICULE DE BREVET EUROPEEN

(11) **EP 3 731 557 B1**
(45) Date de publication et mention de la délivrance du brevet: **30.08.2023**
(21) Numéro de dépôt: 20171167.8
(22) Date de dépôt: 23.04.2020
(51) Int. Cl.: H04W 24/02, H04W 48/08, H04W 84/18

(54) **PROCEDE DE SUPERVISION DE LA CONNEXION ENTRE DEUX NOEUDS D'UN RESEAU DE COMMUNICATION**
ÜBERWACHUNGSVERFAHREN DER VERBINDUNG ZWISCHEN ZWEI KNOTEN EINES KOMMUNIKATIONSNETZES
METHOD FOR SUPERVISING THE CONNECTION BETWEEN TWO NODES OF A COMMUNICATION NETWORK

(30) Priorité: 25.04.2019 FR 1904393
(43) Date de publication de la demande: 28.10.2020
(73) Titulaire: Airbus DS SLC, 78990 Elancourt (FR)
(72) Inventeur: PATEROUR, Olivier, 78280 GUYANCOURT (FR); LAFFITTE, Pascal, 91700 Sainte Geneviève des Bois (FR)
(74) Mandataire: Cabinet Camus Lebkiri

(56) Documents cités:
- NOKIA: "Solution on floor grant for multi-talker feature", 3GPP DRAFT; S6-170878_MULTI-TALKER_SOLUTION_FLOOR_GRAN T, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG6, no. Malmö, Sweden; 20170717 - 20170721 17 juillet 2017 (2017-07-17), XP051311260, Extrait de l'Internet: URL:http://www.3gpp.org/ftp/Meetings_3GPP_ SYNC/SA6/Docs/ [extrait le 2017-07-17]
- SAMSUNG ELECTRONICS: "Floor control corrections", 3GPP DRAFT; 24380_CR0035R4_(REL-13)_C1-162838, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG1, no. Ljubjlana (Slovenia); 20160411 - 20160415 12 juin 2016 (2016-06-12), XP051100232, Extrait de l'Internet: URL:http://www.3gpp.org/ftp/Meetings_3GPP_ SYNC/CT/Docs/ [extrait le 2016-06-12]
- DEPARTMENT OF COMMERCE U S: "Update of MCPTT TC 7.1.1.1", 3GPP DRAFT; R5-176269R1_UPDATE OF MCPTT TC 7.1.1.1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. TSG RAN, no. Reno, USA; 20171127 - 20171201 29 novembre 2017 (2017-11-29), XP051376371, Extrait de l'Internet: URL:http://www.3gpp.org/ftp/tsg%5Fran/WG5% 5FTest%5Fex%2DT1/Intermediate%5FMeeting%5F Documents/TSGR5%5F77/ [extrait le 2017-11-29]
- SAMSUNG: "Off-network - Floor queue position", 3GPP DRAFT; C1-161218 WAS 1065 OFF-NETWORK - FLOOR QUEUE POSITION, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRAN , vol. CT WG1, no. Jeju (Korea); 20160215 - 20160219 22 février 2016 (2016-02-22), XP051078143, Extrait de l'Internet: URL:http://www.3gpp.org/ftp/tsg_ct/WG1_mm- cc-sm_ex-CN1/TSGC1_96_Jeju/docs/ [extrait le 2016-02-22]

## Description

### DOMAINE TECHNIQUE DE L'INVENTION

Le domaine technique de l'invention est celui des réseaux de communication et plus particulièrement celui de la supervision de la connexion entre deux noeuds d'un réseau de communication.

La présente invention concerne un procédé de supervision de la connexion entre deux noeuds d'un réseau de communication et plus particulièrement entre un client et un serveur ou entre deux serveurs.

### ARRIERE-PLAN TECHNOLOGIQUE DE L'INVENTION

Les réseaux de communication fonctionnant selon le modèle client-serveur comprennent une pluralité de noeuds dont certains sont des clients et d'autres des serveurs. Dans ces modèles, pour établir une communication entre un client et un serveur, les clients sont toujours initiateurs de la communication, en envoyant une requête, et les serveurs destinataires de la requête. C'est le cas par exemple dans les modèles web, où un client souhaitant consulter une page web envoie une requête à un serveur, qui en retour fournit la page web demandée. Les communications étant exclusivement à l'initiative du client, le serveur n'a pas besoin de s'assurer d'un bon état de la connexion avec le client.

On entend par « bon état de la connexion » un état de la connexion, donc du lien réseau, entre le client et le serveur permettant une communication entre les deux entités, c'est-à-dire un état dans lequel le serveur peut joindre le client.

Dans le standard 3GPP régissant les réseaux mobiles de type « GSM » selon la dénomination anglo-saxonne « Global System for Mobile Communications » et plus particulièrement dans les déploiements faisant appel à des services de communications critiques définis par le 3GPP appelés « MCS » selon la dénomination anglo-saxonne « Mission Critical Services », il arrive que le serveur soit initiateur de la communication avec un client.

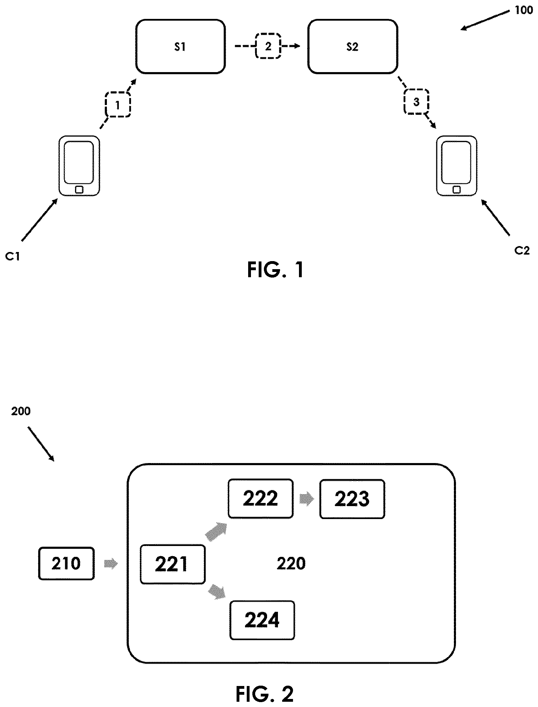

[Fig. 1] La figure 1 montre une représentation schématique d'un réseau de communication de l'art antérieur.

Le réseau de communication 100 représenté à la Figure 1 est par exemple un réseau selon le standard 3GPP MCS. Le réseau de communication 100 comprend deux clients C1 et C2 et deux serveurs S1 et S2. On entend par « réseau de communication selon le standard 3GPP MCS », un réseau de communication compatible avec le standard 3GPP MCS et plus particulièrement avec la version actuelle du 3GPP qui est la version 15, avec les versions précédentes à partir de la version 13 et avec les versions suivantes intégrant toutes les caractéristiques de l'invention.

Dans le 3GPP MCS, lorsqu'un client souhaite communiquer avec un autre client, il envoie une requête à un serveur. Par exemple, lorsque le client C1 souhaite communiquer avec le client C2, et qu'une session de communication est déjà établie, il envoie une requête de communication au serveur S1 dans une étape 1. Le serveur S1, transmet la requête au serveur S2 dans une étape 2, soit directement, soit en passant par un ou plusieurs autres serveurs (non représentés). Le serveur S2 transmet alors la requête au client C2 dans une étape 3. Il existe d'autres cas où le serveur S2 initie la communication avec le client C2 selon le 3GPP MCS.

Dans de tels cas, la connexion entre le client C2 et le serveur S2 peut avoir été perdue, notamment car tout problème dans le réseau de transport conduisant à une coupure du service entraine une perte de connexion entre le client C2 et le serveur S2.

Le standard 3GPP MCS ne décrit pas de moyen de superviser la connexion entre un client et un serveur, ou entre deux serveurs, par exemple lorsqu'un serveur est un « Controlling Server » (selon la dénomination anglo-saxonne pour « Serveur Contrôlant ») et que l'autre serveur est un « Non-Controlling Server » (selon la dénomination anglo-saxonne pour « Serveur Non Contrôlant »). Cette supervision est nécessaire pour minimiser la perte d'informations due à la durée de la perte de connexion. En effet, dans le cas où le client est initiateur de la communication, il a connaissance de la perte de connexion avec le serveur, par exemple car il ne reçoit pas d'acquittement. En revanche, quand le serveur est initiateur de la communication avec le client, le client n'a aucun moyen de savoir que le serveur a cherché à communiquer avec lui.

Des solutions à ce problème ont été envisagées dans l'art antérieur, par exemple en envoyant des messages périodiques (aussi appelés « heartbeat » selon la dénomination anglo-saxonne pour « pulsation cardiaque »), en utilisant les notifications « push » proposées par exemple par les systèmes d'exploitation de téléphones mobiles, telles les « APN » d'iOS^{®} (selon la dénomination anglo-saxonne « Apple Push Notifications ») et « FCM » d'Android^{®} (selon la dénomination anglo-saxonne « Firebase Cloud Messaging » pour « Messagerie Google par le Nuage »). Les notifications « push » permettent, en étant envoyées périodiquement, de surveiller la connexion entre client et serveur dans le 3GPP MCS.

Cette solution est pertinente pour des applications de messageries, qui ne sont pas périodiques par définition. Elle ne l'est cependant pas pour des services « temps réel » pour lesquels le temps d'établissement de la connexion doit être garanti. De plus, cette solution est inaccessible lorsqu'aucun accès internet n'est possible, par exemple lorsque le réseau est déployé et fermé, c'est-à-dire seulement accessible en local.

De plus, dans le cas d'une communication privée en « Push-To-Talk » (« PTT » selon la dénomination anglo-saxonne pour « Appuyer pour prendre la parole ») en mode « pré-arrangé » comme défini par le standard 3GPP MCS, la session de communication entre les deux clients communiquant n'est établie qu'à l'appui de l'utilisateur sur le bouton de l'équipement utilisateur. Il faut donc pouvoir surveiller la connexion entre deux noeuds sans qu'une session ne soit établie entre ces noeuds.

Il existe donc un besoin d'avoir une solution pour surveiller la connexion entre deux noeuds d'un réseau suivant le modèle client-serveur dans lequel le serveur peut initier une communication ou encore dans lequel le réseau de communication n'est pas relié au réseau Internet, et indépendamment du fait qu'une session de communication soit établie entre les deux noeuds. On connait le document "Floor control corrections" (SAMSUNG, 3GPP MEETING, C1-162838, 12 Juin 2016) qui décrit un procédé de surveillance de la connexion entre deux noeuds.

### RESUME DE L'INVENTION

L'invention offre une solution aux problèmes évoqués précédemment, en permettant une surveillance de la connexion entre deux noeuds d'un réseau de communication suivant le modèle client-serveur dans lequel le serveur peut initier la communication, la surveillance pouvant être mise en oeuvre indépendamment de la connexion du réseau de communication au réseau Internet.

Un aspect de l'invention concerne un procédé de surveillance de la connexion entre un premier noeud et un deuxième noeud d'un réseau de communication tel que défini dans la revendication 1.

Grâce à l'invention, il est possible de surveiller la connexion entre deux noeuds d'un réseau de communication, la surveillance pouvant être effectuée par n'importe lequel des deux noeuds. En effet, l'invention utilise avantageusement une session établie entre les deux noeuds pour surveiller la connexion entre les noeuds. Ainsi, chacun des deux noeuds a la possibilité de surveiller la connexion entre eux, puisqu'une session est toujours établie entre eux. Il n'est même pas nécessaire qu'une session de communication soit établie entre les deux noeuds. La période est définie par un paramètre de période en mémoire du premier noeud et du deuxième noeud.

Outre les caractéristiques qui viennent d'être évoquées dans le paragraphe précédent, le procédé de surveillance selon un aspect de l'invention peut présenter une ou plusieurs caractéristiques complémentaires parmi les suivantes, considérées individuellement ou selon toutes les combinaisons techniquement possibles :
- l'étape de surveillance de la connexion entre le premier noeud et le deuxième noeud comprend :
   - Si le deuxième noeud n'a pas reçu le message dans la période définie par le paramètre de période :
      - Une sous-étape de mise à jour d'un compteur de non-réception du message par le deuxième noeud,
      - Si la valeur du compteur de non-réception est supérieure à la valeur d'un seuil de non-réception, une sous-étape de détection d'une perte de connexion entre le premier noeud et le deuxième noeud,
   - Si le deuxième nœud a reçu le message dans la période définie par le paramètre de période, une sous-étape de réinitialisation du compteur de non-réception.
- le réseau de communication est un réseau de communication selon le standard 3GPP MCS.
- la session sélectionnée est une session de groupe dédié à l'urgence établi en mode messagerie et le message envoyé périodiquement est un message du protocole de contrôle de prise de parole.
- la session sélectionnée est une session de groupe dédié à la signalisation établi en mode messagerie et le message envoyé périodiquement est un message de signalisation.
- la session sélectionnée est une session du premier groupe de communication établi en mode messagerie entre le premier noeud et le deuxième noeud et le message envoyé périodiquement est un message du protocole de contrôle de prise de parole.
- lorsque le groupe de communication établi entre le premier noeud et le deuxième noeud dont une session a été sélectionnée comme session de surveillance est désaffilié ou supprimé, l'étape de sélection d'une session est répétée.
- lorsque le deuxième noeud a détecté la perte de connexion avec le premier noeud, le deuxième noeud envoie périodiquement un message d'enregistrement au premier noeud.
- le premier noeud est un serveur et le deuxième noeud est un client.
- lorsque la perte de connexion est détectée, le deuxième noeud annonce à un utilisateur du deuxième noeud la perte de connexion avec le premier noeud.
   - le premier noeud est un serveur ne contrôlant pas la session de surveillance et le deuxième noeud est un serveur contrôlant la session de surveillance.

De plus, dans l'invention, chaque noeud a en mémoire le même paramètre de période, permettant à chaque noeud de connaître la période de surveillance, rendant le procédé réversible : un des deux noeuds destinataire des messages périodiques peut devenir émetteur et inversement pour l'autre noeud.

Grâce à l'invention, le noeud recevant le message de surveillance peut connaître l'état de la connexion entre les deux noeuds. Ainsi, même lorsqu'un serveur est initiateur d'une communication, le client, recevant les messages de surveillance provenant du serveur, peut surveiller la connexion entre les deux noeuds, et ainsi s'assurer qu'il est bien connecté au serveur et qu'il peut recevoir des requêtes de communication du serveur.

Avantageusement, le procédé peut établir une session de surveillance quand aucune session n'est établie entre les deux noeuds. En effet, il est possible que les deux noeuds soient connectés mais qu'aucune session ne soit établie entre eux, par exemple dans le cas du mode « pré-arrangé » du 3GPP MCS.

Avantageusement, le procédé selon l'invention peut utiliser une session existante entre les deux noeuds, par exemple une session du groupe dédié à l'urgence (aussi appelé « dedicated emergency group » selon la dénomination anglo-saxonne dans le 3GPP MCS) comme session de surveillance. L'avantage d'une session de groupe dédié à l'urgence est que chacun des deux noeuds est toujours affilié au groupe dédié à l'urgence, il est donc toujours possible de surveiller la connexion entre les deux noeuds.

Le procédé selon l'invention peut aussi utiliser par exemple une session de communication d'un groupe de communication établie entre les deux noeuds. Un inconvénient des groupes de communication est qu'un noeud peut y être désaffilié ou que le groupe de communication peut être supprimé. Le procédé selon l'invention permet d'outrepasser cet inconvénient en sélectionnant une autre session d'un autre groupe de communication auquel les deux noeuds sont affiliés lorsqu'un des deux noeuds est désaffilié au premier groupe de communication ou lorsque le premier groupe de communication est supprimé.

Lorsqu'une session de groupe de communication ou de groupe dédié à l'urgence est sélectionnée, le message périodiquement envoyé dans le procédé selon l'invention est avantageusement un message du protocole de contrôle de prise de parole (le protocole étant appelé « Floor Control Protocol» dans le standard 3GPP MCS et le message du protocole de contrôle de prise de parole étant appelé « Floor Idle »), le procédé selon l'invention tirant avantageusement parti de l'infrastructure existante du réseau de communication respectant le standard 3GPP MCS.

Le procédé selon l'invention peut aussi utiliser avantageusement une session d'un groupe dédié à la signalisation, groupe non visible de l'utilisateur d'un équipement utilisateur et pouvant être défini et identique pour un ensemble d'utilisateurs, ne rendant pas nécessaire d'avoir une session de groupe de communication déjà établie entre les deux noeuds au moment où l'on souhaite surveiller la connexion entre les noeuds.

L'invention et ses différentes applications seront mieux comprises à la lecture de la description qui suit et à l'examen des figures qui l'accompagnent.

### BREVE DESCRIPTION DES FIGURES

Les figures sont présentées à titre indicatif et nullement limitatif de l'invention.
- La Figure 1 montre une représentation schématique d'un réseau de communication de l'art antérieur.
- La Figure 2 montre une représentation schématique du procédé selon l'invention.
- La Figure 3 montre une représentation schématique d'un réseau de communication mettant en oeuvre le procédé de l'invention selon un premier mode de réalisation.
- La Figure 4 montre une représentation schématique d'un réseau de communication mettant en oeuvre le procédé de l'invention selon un deuxième mode de réalisation.
- La Figure 5 montre une représentation schématique d'un réseau de communication mettant en oeuvre le procédé de l'invention selon un troisième mode de réalisation.
- La figure 6 montre une représentation schématique d'un réseau de communication comprenant des groupes dédiés à la signalisation.
- La figure 7 montre une représentation schématique d'un réseau de communication comprenant des groupes dédiés à la signalisation.
- La figure 8 montre une représentation schématique du procédé selon une variante de l'invention.

### DESCRIPTION DETAILLEE

Les figures sont présentées à titre indicatif et nullement limitatif de l'invention.

Sauf précision contraire, un même élément apparaissant sur des figures différentes présente une référence unique.

[Fig. 2] La figure 2 montre une représentation schématique du procédé selon l'invention.

Le procédé 200 selon un premier mode de réalisation de l'invention représenté à la Figure 2 comprend une étape de sélection d'une session de surveillance 210 et une étape de surveillance de la connexion entre les deux noeuds 220.

Le procédé de surveillance 200 selon l'invention est un procédé de surveillance de la connexion entre deux noeuds d'un réseau de communication. On entend par « réseau de communication », un réseau permettant d'accéder à des services de communication, c'est-à-dire à des services liés à de la communication, par exemple l'accès à l'audio, à la vidéo ou encore à une messagerie avec fichiers pour interagir avec un ou plusieurs équipements utilisateurs. Les services de communication permettent d'établir des communications privées entre deux équipements utilisateurs ou des communications de groupe entre les équipements utilisateurs affiliés à un même groupe multimédia. Le réseau de communication auquel sont connectés les deux noeuds est par exemple un réseau de communication selon le standard 3GPP MCS. On entend par « réseau de communication selon le standard 3GPP MCS », un réseau de communication compatible avec le standard3GPP MCS et plus particulièrement avec la version actuelle du 3GPP qui est la version 15, avec les versions précédentes à partir de la version 13 et avec les versions suivantes intégrant toutes les caractéristiques de l'invention.

On entend par « groupe multimédia » un groupe regroupant plusieurs équipements utilisateurs pouvant interagir entre eux une fois authentifiés et enregistrés auprès d'un serveur du réseau de communication permettant l'accès au groupe multimédia.

Le réseau de communication peut être fixe, par exemple un réseau de communication couvrant une entreprise, ou mobile, par exemple tactique, c'est-à-dire utilisé dans le cas d'une mission des forces spéciales.

Le réseau de communication comprend des noeuds. On entend par « noeud » tout équipement du réseau. Ainsi, dans un réseau suivant le modèle client-serveur, un noeud peut être un serveur ou un client, par exemple un équipement utilisateur.

On entend par « connexion entre deux noeuds » le lien réseau entre les deux noeuds du réseau. Aussi, lorsque l'on surveille la connexion entre deux noeuds, on s'assure de l'état correct du lien réseau entre les deux noeuds, c'est-à-dire qu'on s'assure que les deux noeuds du réseau ont la possibilité de communiquer.

On entend par « session » un ensemble de ressources du réseau réservées à un échange entre deux noeuds. Par exemple, dans le cas d'une session de communication entre deux noeuds, un ensemble de ressources est réservé à la communication entre les deux noeuds. Par exemple, dans le cas d'une session de signalisation entre deux noeuds, un ensemble de ressources est réservé à la signalisation entre les deux noeuds.

La première étape du procédé de surveillance 200 de la connexion entre deux noeuds selon un premier mode de réalisation de l'invention est une étape 210 de sélection d'une session de surveillance.

On entend par « session de surveillance » une session qui, une fois sélectionnée, sera utilisée pour la surveillance de la connexion entre les deux noeuds. Cette session n'est pas forcément utilisée que pour surveiller la connexion entre les deux noeuds.

Dans l'étape 210, une session de surveillance est sélectionnée. La sélection est effectuée par l'un des deux noeuds, par exemple par un processeur du noeud, utilisant un programme enregistré par exemple en mémoire du noeud. Le noeud réalisant la sélection de la session de surveillance est par exemple le noeud qui surveillera la connexion entre les deux noeuds. L'étape de sélection 210 de la session peut aussi être réalisée par une entité autre que l'un des deux noeuds dont la connexion est à surveiller, par exemple par un autre noeud du réseau, par exemple un dispositif de gestion du réseau. Selon l'invention, plusieurs types de sessions peuvent être sélectionnées.

La session sélectionnée est une session établie entre les deux noeuds. Une session sélectionnée comme « session de surveillance » peut être une session d'un groupe dédié à l'urgence, une session d'un groupe de communication, ou encore une session d'un groupe dédié à la signalisation.

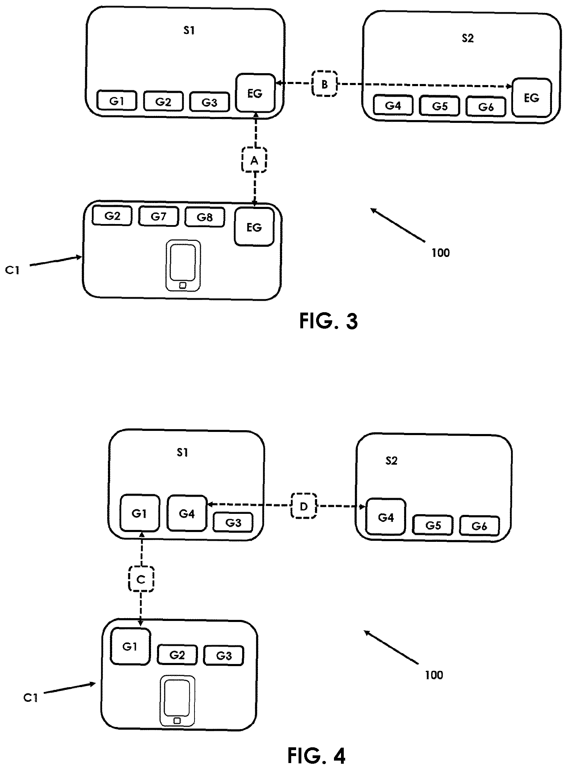

[Fig. 3] La Figure 3 montre une représentation schématique d'un réseau de communication 100 mettant en oeuvre le procédé de l'invention selon un premier mode de réalisation.

Le réseau de communication 100 représenté à la Figure 3 comprend trois noeuds : deux serveurs S1 et S2 et un client C1. La connexion à surveiller peut être par exemple entre le serveur S1 et le client C1, entre le serveur S1 et le serveur S2 ou encore entre le serveur S2 et le client C1. La Figure 3 ne représente que la surveillance de la connexion entre les serveurs S1 et S2 et entre le serveur S1 et le client C1.

Une session sélectionnée à la Figure 3 comme « session de surveillance » pour surveiller la connexion entre le client C1 et le serveur S1 est une session A d'un groupe dédié à l'urgence EG établi en mode « messagerie » auquel est affilié le client C1 et dont le serveur S1 est un gestionnaire. Une autre session sélectionnée à la Figure 3 comme « session de surveillance » pour surveiller la connexion entre les serveurs S1 et S2 est une session B d'un groupe dédié à l'urgence EG établi en mode « messagerie » duquel les serveurs S1 et S2 sont gestionnaires.

Un groupe de communication est établi selon deux modes possibles dans le standard 3GPP MCS :
- soit en mode « chat » : chaque utilisateur se joint au groupe quand il le souhaite et est prêt à participer à tout moment au groupe : si quelqu'un parle, seuls ceux qui participent au groupe entendent, les autres membres du groupe n'entendent pas, le serveur n'établit pas les sessions,
- soit en mode « pré-arrangé » : quand un utilisateur demande à parler, le serveur n'établit les sessions qu'à ce moment-là avec l'ensemble des utilisateurs du groupe

On entend par « établie en mode « messagerie » », une session établie en mode « chat » comme décrit dans le standard 3GPP MCS, le terme « chat » étant la dénomination anglo-saxonne pour « messagerie » en français.

Ainsi, par exemple dans le cas où le réseau de communication 100 suit le standard 3GPP MCS et comprend au moins un groupe dédié à l'urgence (selon la dénomination anglo-saxonne « Dedicated Emergency Group ») établi en mode « messagerie » auquel sont affiliés chacun des deux noeuds et dans lequel une session est établie entre les deux noeuds, la session utilisée pour la surveillance de la connexion entre les deux noeuds est cette session avantageusement établie entre les deux noeuds pendant toute la présence des noeuds au sein du réseau.

Dans le cas où les noeuds ne sont pas affiliés à un même groupe dédié à l'urgence, ou dans le cas où l'un au moins des noeuds n'est affilié à aucun groupe dédié à l'urgence, ou dans tout autre cas où cela peut être jugé nécessaire, la session sélectionnée comme « session de surveillance » peut être une session d'un groupe de communication établi en mode « messagerie » auquel les deux noeuds sont affiliés, la session étant établie entre au moins les deux noeuds.

[Fig. 4] La Figure 4 montre une représentation schématique d'un réseau de communication 100 mettant en oeuvre le procédé de l'invention selon un deuxième mode de réalisation.

Le réseau de communication 100 représenté à la Figure 4 comprend trois noeuds : deux serveurs S1 et S2 et un client C1. La connexion à surveiller peut être par exemple entre le serveur S1 et le client C1, entre le serveur S1 et le serveur S2 ou encore entre le serveur S2 et le client C1. La Figure 4 ne représente que la surveillance de la connexion entre les serveurs S1 et S2 et entre le serveur S1 et le client C1.

Une session sélectionnée à la Figure 4 comme « session de surveillance » pour surveiller la connexion entre le client C1 et le serveur S1 est une session C d'un groupe de communication G1 établi en mode « messagerie » auquel est affilié le client C1 et dont le serveur S1 est gestionnaire. Une autre session sélectionnée à la Figure 4 comme « session de surveillance » pour surveiller la connexion entre les serveurs S1 et S2 est une session D d'un groupe de communication G4 établi en mode « messagerie » duquel les serveurs S1 et S2 sont gestionnaires.

Dans le deuxième mode de réalisation, la session sélectionnée est par exemple la première session établie entre les deux noeuds du premier groupe de communication auquel sont affiliés les deux noeuds. On entend par « premier groupe » le premier groupe de communication établi en mode « messagerie » auquel les deux noeuds se sont affiliés, temporellement, et auquel les deux noeuds sont toujours affiliés. A la Figure 4, le premier groupe de communication établi en mode « messagerie » entre les deux noeuds client C1 et serveur S1 est le groupe de communication G1 et le premier groupe de communication établi en mode « messagerie » entre les deux noeuds de communication serveur S1 et serveur S2 est le groupe de communication G4.

On entend par « première session » la première session à avoir été établie entre au moins les deux noeuds, temporellement, et étant toujours établie entre les deux noeuds. Lorsque l'un au moins des noeuds n'est plus affilié au groupe de communication dont la session avait été sélectionnée comme « session de surveillance », ou lorsque ce groupe de communication est supprimé, l'étape de sélection 210 de session de surveillance est réitérée. Ainsi, une session d'un nouveau groupe de communication établi en mode « messagerie » est sélectionnée, le nouveau groupe de communication étant alors le premier groupe de communication établi en mode « messagerie » auquel les deux noeuds se sont affiliés, temporellement, et auquel les deux noeuds sont toujours affiliés, l'ancien groupe ne remplissant plus le second critère d'affiliation des deux noeuds au groupe.

Une session sélectionnée comme « session de surveillance » peut être une session d'un groupe dédié à la signalisation.

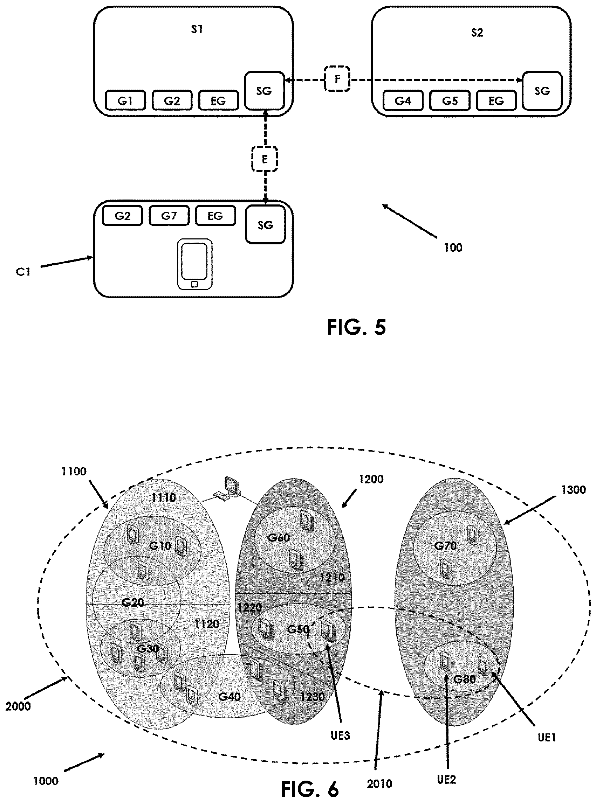

[Fig. 5] La Figure 5 montre une représentation schématique d'un réseau de communication 100 mettant en oeuvre le procédé de l'invention selon un troisième mode de réalisation.

Le réseau de communication 100 représenté à la Figure 5 comprend trois noeuds : deux serveurs S1 et S2 et un client C1. La connexion à surveiller peut être par exemple entre le serveur S1 et le client C1, entre le serveur S1 et le serveur S2 ou encore entre le serveur S2 et le client C1. La Figure 5 ne représente que la surveillance de la connexion entre les serveurs S1 et S2 et entre le serveur S1 et le client C1.

Une session sélectionnée à la Figure 5 comme « session de surveillance » pour surveiller la connexion entre le client C1 et le serveur S1 est une session E d'un groupe dédié la signalisation SG établi en mode « messagerie » auquel sont affiliés le client C1 et le serveur S1. Une autre session sélectionnée à la Figure 5 comme « session de surveillance » pour surveiller la connexion entre les serveurs S1 et S2 est une session F d'un groupe dédié à la signalisation SG établi en mode « messagerie » auquel sont affiliés les serveurs S1 et S2.

Dans le troisième mode de réalisation, un groupe dédié à la signalisation est un groupe d'équipements utilisateurs ne permettant que la transmission de messages de signalisation, par exemple des messages de contrôle, des messages d'annonce, ou tout autre type de messages permettant l'établissement de communications au sein du réseau et la gestion du réseau.

### Description d'un groupe dédié à la signalisation

Les paragraphes suivants s'attachent à décrire un groupe dédié à la signalisation.

[Fig. 6] La figure 6 montre une représentation schématique d'un réseau de communication comprenant des groupes dédiés à la signalisation.

On entend par « réseau de communication », un réseau permettant d'accéder à des services de communication, c'est-à-dire à des services liés à de la communication, par exemple l'accès à l'audio, à la vidéo ou encore à une messagerie avec fichiers pour interagir avec un ou plusieurs équipements utilisateurs. Les services de communication permettent d'établir des communications privées entre deux équipements utilisateurs ou des communications de groupe entre les équipements utilisateurs affiliés à un même groupe multimédia.

On entend par « groupe multimédia » un groupe virtuel regroupant plusieurs équipements utilisateurs pouvant interagir entre eux une fois authentifiés via un serveur du réseau de communication permettant l'accès au groupe multimédia.

Le réseau de communication 1000 représenté à la Figure 6 comprend une pluralité de groupes dédiés à la signalisation. Le réseau de communication 1000 comprend un groupe dédié à la signalisation 2000 auquel tous les équipements utilisateurs du réseau de communication 1000 sont affiliés. Cela permet d'annoncer la disponibilité de services à tous les équipements utilisateurs du réseau de communication 1000. Le groupe étant dédié à la signalisation, il permet de ne pas avoir à créer de groupe de communication regroupant tous les équipements utilisateurs du réseau et donc de respecter des règles de confidentialité et de simplifier la gestion de réseau de communication 1000.

Les groupes de signalisation 2000 et 2010 sont créés par un opérateur du réseau de communication 1000. Un réseau de communication 1000 peut comprendre plusieurs groupes dédiés à la signalisation. Le ou les opérateurs les ayant créés peuvent avoir fait le choix de refléter le partitionnement des organisations 1100, 1200 et 1300, par exemple en créant un groupe dédié à la signalisation pour chaque organisation 1100, 1200 et 1300, et en créant en outre un groupe dédié à la signalisation par sous-organisation 1110, 1120, 1210, 1220 et 1230. L'opérateur peut aussi créer des groupes dédiés à la signalisation inter-organisations comme le groupe dédié à la signalisation 2010.

Ainsi, les groupes dédiés à la signalisation permettent de refléter le partitionnement et la hiérarchie des organisations au sein desquelles ils sont mis en oeuvre, tout en respectant les critères de confidentialité en ne permettant pas la communication entre tous les équipements utilisateurs du réseau de communication 1000.

Les groupes dédiés à la signalisation sont des groupes d'échange de données de signalisation. Ils n'échangent donc pas de médias tels que de la vidéo ou de la voix. Par exemple, dans le cas d'un réseau de communication selon le standard 3GPP MCS, ils sont des groupes d'échange de données de type « MCData ». On entend par « réseau de communication selon le standard 3GPP MCS », un réseau de communication compatible avec le standard 3GPP MCS et plus particulièrement avec la version actuelle du 3GPP qui est la version 15, avec les versions précédentes à partir de la version 13 et avec les versions suivantes intégrant toutes les caractéristiques des groupes de signalisation.

Un ou plusieurs équipements utilisateurs sont affiliés aux groupes dédiés à la signalisation créés par l'opérateur, soit en étant affiliés implicitement comme le permet le standard 3GPP MCS, c'est-à-dire en étant affiliés de manière contrainte par le système régissant le réseau, soit en choisissant de s'affilier à un groupe dédié à la signalisation. L'utilisateur n'ayant pas connaissance des groupes de signalisation auquel il est affilié, l'équipement utilisateur choisit de s'affilier ou non à un groupe dédié à la signalisation, lorsque l'affiliation ne lui est pas contrainte, en mettant en oeuvre, par exemple par un processeur de l'équipement utilisateur, un algorithme enregistré en mémoire de l'équipement utilisateur.

Le réseau de communication peut être fixe, par exemple un réseau de communication couvrant une entreprise, ou mobile, par exemple tactique, c'est-à-dire utilisé dans le cas d'une mission des forces spéciales.

Un équipement utilisateur UE1, UE2 et UE3 est par exemple un smartphone, une tablette, un ordinateur portable ou tout autre dispositif permettant de communiquer au sein d'un réseau.

On entend par groupe « dédié à la signalisation » un groupe d'équipements utilisateurs ne permettant que la transmission de messages de signalisation, par exemple des messages de contrôle, des messages d'annonce de disponibilité de service, ou tout autre type de messages permettant l'établissement de communications au sein du réseau et la gestion du réseau. Les messages d'annonce de disponibilité de service peuvent être par exemple des notifications.

Le réseau de communication 1000 comprend un autre groupe dédié à la signalisation 2010 comprenant les équipements utilisateurs UE1 et UE2 affiliés au groupe de communication G80 et UE3 affilié au groupe de communication G50.

Les groupes dédiés à la signalisation 2010 permettent d'éviter l'« effet silo » rencontré lorsque des équipements utilisateurs se trouvent dans des organisations 1200 et 1300 différentes et dans des groupes de communication G50 et G80 différents. Grâce au groupe dédié à la signalisation 2010, les équipements utilisateurs UE1, UE2 et UE3 peuvent recevoir des messages de signalisation permettant par exemple l'annonce de la disponibilité d'un ou plusieurs services.

Les messages de signalisation peuvent être émis par des équipements utilisateurs du réseau de communication 1000, par un serveur du réseau, par un équipement superviseur du réseau ou par tout autre équipement connecté au réseau.

Une annonce de disponibilité de service est émise à un groupe dédié à la signalisation ou à plusieurs groupes dédiés à la signalisation.

Ces services peuvent être tout service qui nécessite d'être annoncé à l'équipement utilisateur, comme par exemple des services d'alerte de détresse, de péril imminent, de communication privée, de communication de groupe en multidiffusion, de communication système, de vision ambiante de groupe et d'écoute ambiante de groupe.

Par exemple, dans le cas de services dits « legacy » (selon la dénomination anglo-saxonne pour « traditionnels »), c'est-à-dire les services déjà existants par exemple dans le standard 3GPP MCS, tels que les alertes de détresse et de péril imminent, les groupes dédiés à la signalisation permettent d'annoncer qu'un des équipements utilisateurs du groupe dédié à la signalisation est en détresse ou qu'un péril est imminent à plusieurs équipements utilisateurs qui ne seraient pas forcément affiliés à un même groupe de communication.

Dans le cas des communications privées ou des communications de groupe en multidiffusion, cela peut permettre par exemple d'annoncer qu'un appel est en cours et de proposer à un équipement utilisateur de rejoindre la communication avec des équipements utilisateurs qui ne sont pas forcément dans un de ses groupes de communication. Cela permet d'annoncer la disponibilité d'un service traditionnel, c'est-à-dire déjà connu, à plusieurs équipements utilisateurs ne se trouvant pas forcément dans le même groupe de communication.

Ainsi, dans le cas par exemple d'un réseau de communication au sein d'un aéroport, les utilisateurs sont désignés par leur profession (bagagiste, agent de sécurité, pilote, équipage, pompier etc.) et travaillent sur des vols différents au long de la journée. Les utilisateurs choisissent leur vol en fonction de leur planning de vol. Chaque utilisateur doit pouvoir communiquer avec tous les autres utilisateurs ayant le même métier ou le même vol, ou ayant le même métier que lui sur le même vol.

Grâce aux groupes dédiés à la signalisation, une annonce de disponibilité de service peut être émise à tous les utilisateurs ayant le même métier, ayant le même vol, ou ayant le même métier et le même vol grâce à un ou plusieurs paramètres de l'annonce de disponibilité de service. Ce paramètre peut par exemple être une adresse fonctionnelle. On entend par « adresse fonctionnelle » un identifiant par exemple lié à une profession, tel qu'un code métier, lié à un vol, tel qu'un code de vol ou tout autre identifiant permettant d'adresser un équipement utilisateur. Cette annonce de disponibilité de service peut annoncer la disponibilité d'une communication privée ou d'une communication de groupe entre tous les utilisateurs ayant le même métier et proposer à chaque utilisateur ayant le même métier de rejoindre ladite communication privée. Ainsi, même si les utilisateurs ayant le même métier ne se trouvaient pas dans le même groupe de communication, ils peuvent rejoindre un groupe grâce à cette annonce.

L'annonce de disponibilité d'une communication privée ou d'une communication de groupe peut être envoyée à tous les équipements utilisateurs, chaque équipement utilisateur décidant alors, par exemple à l'aide d'un algorithme enregistré en mémoire et mis en oeuvre par un processeur de l'équipement utilisateur, s'il remplit les critères donnés par le ou les paramètres compris dans l'annonce de disponibilité de service et donc s'il doit rejoindre la communication annoncée.

Les groupes dédiés à la signalisation permettent en outre des annonces de disponibilité de services « nouvelle génération », tels que des services multimédias. Par exemple, ces services peuvent être des services de vision ambiante de groupe et d'écoute ambiante de groupe, tels que définis dans le standard 3GPP MCS. Ces services ne sont plus adressés individuellement aux équipements utilisateurs mais il est possible d'adresser une pluralité d'équipements utilisateurs.

Un service de « visualisation ambiante de groupe » (selon la dénomination anglo-saxonne « group ambient viewing ») permet à un équipement opérateur tel qu'un « dispatcher » (selon la dénomination anglo-saxonne pour « répartiteur », terme utilisé pour mentionner un « équipement opérateur de salle de contrôle »), équipement fixe permettant de communiquer avec des équipements utilisateurs et/ou la gestion du réseau, principalement à partir de salles de contrôle, d'accéder au flux vidéo d'un équipement utilisateur en direct. L'utilisateur peut ou non être informé de la réception du flux vidéo par la salle de contrôle.

Un service d' « écoute ambiante de groupe » (selon la dénomination anglo-saxonne « group ambient listening ») permet à un équipement opérateur de salle de contrôle, d'accéder au flux audio d'un équipement utilisateur en direct. L'utilisateur peut ou non être informé de la réception du flux audio par la salle de contrôle.

Ces deux services multimédias peuvent être annoncés à un ou plusieurs équipements utilisateurs affiliés à un ou plusieurs groupes dédiés à la signalisation à partir par exemple d'un équipement fixe ou d'un autre équipement utilisateur. Les groupes dédiés à la signalisation permettent avantageusement de recevoir les flux audio et/ou vidéo d'équipements utilisateurs grâce à des messages de signalisation tels que des messages d'annonce de disponibilité de service de vision ambiante de groupe ou d'écoute ambiante de groupe. Ainsi, chaque équipement utilisateur recevant l'annonce de disponibilité de service, c'est-à-dire chaque équipement utilisateur affilié au ou aux groupes dédiés à la signalisation destinataires de l'annonce peut décider ou non d'utiliser ce service annoncé.

Un équipement utilisateur décide d'utiliser un service soit par un traitement du message de signalisation, reçu car il est affilié à un groupe dédié à la signalisation destinataire dudit message de signalisation, par un algorithme enregistré en mémoire et mis en oeuvre par un processeur, soit en demandant à l'utilisateur de l'équipement utilisateur s'il choisit d'utiliser le service disponible annoncé.

Par exemple, dans le cas d'une communication de groupe en multidiffusion annoncé comme disponible à un groupe dédié à la signalisation, les équipements utilisateurs affiliés au groupe dédié à la signalisation peuvent demander à l'utilisateur, par exemple par un message affiché sur un écran de l'équipement utilisateur, si l'utilisateur souhaite rejoindre la communication en multidiffusion.

Dans un autre exemple, dans le cas d'un service de vision ambiante de groupe, il peut être nécessaire que l'utilisateur ne sache pas que le service est disponible et que l'équipement utilisateur utilise le service disponible annoncé, par exemple pour des raisons de discrétion. Dans ce cas, l'équipement utilisateur disposant d'une intelligence embarquée, par exemple d'un algorithme en mémoire interne et mis en oeuvre par un processeur, décide par lui-même d'utiliser ou non ce service, par exemple en fonction de paramètres compris dans l'annonce de disponibilité de service.

L'annonce de disponibilité de service peut comprendre un ou plusieurs paramètres, permettant de croiser plusieurs paramètres et donc de n'adresser qu'un certain nombre ou un type précis d'équipements utilisateurs.

Par exemple, l'annonce de disponibilité de service peut comprendre un paramètre de localisation.

Dans le cas d'un service d'appel de détresse, l'annonce de service d'appel de détresse peut comprendre la localisation de l'équipement utilisateur à l'origine de l'appel de détresse. Cela permet de localiser l'équipement utilisateur à l'origine de l'appel de détresse et donc de localiser l'évènement.

La façon dont les équipement utilisateurs connaissent et/ou récupèrent leur localisation n'est pas un objet de l'invention. Cela peut être réalisé de façon connue de l'homme du métier, par exemple à partir d'un système GPS (selon la dénomination anglo-saxonne « Global Positioning System » pour « Système Mondial de Positionnement »).

Une annonce de disponibilité de service comprenant une localisation est envoyée à tous les équipements utilisateurs d'un ou de plusieurs groupes dédiés à la signalisation, quelle que soit leur localisation.

Un équipement utilisateur recevant une annonce de disponibilité de service comprenant une localisation utilise son intelligence embarquée, par exemple un algorithme mis en oeuvre par un processeur enregistré en mémoire, pour décider si le service est disponible pour lui. L'algorithme de l'équipement utilisateur récupère par exemple sa position et lit la localisation comprise dans l'annonce de disponibilité de service. Il analyse alors si sa position est proche de la localisation comprise dans l'annonce de disponibilité de service reçue.

On entend que sa position est « proche » de la localisation comprise dans l'annonce de disponibilité de service quand la position de l'équipement utilisateur est dans un rayon inférieur à une valeur prédéterminée par rapport à la localisation comprise dans l'annonce de disponibilité de service. Cette valeur prédéterminée de rayon peut être enregistrée en mémoire de l'équipement utilisateur, par exemple configurée par un opérateur, ou peut être comprise dans l'annonce de disponibilité de service.

Ainsi, tous les équipements utilisateurs affiliés au groupe dédié à la signalisation recevront l'annonce de disponibilité de service via le groupe dédié à la signalisation regroupant par exemple des pompiers, l'annonce comprenant la localisation de l'évènement. Seuls les équipements utilisateurs se trouvant dans la localisation seront alors aptes à utiliser le service. Cela permet par exemple dans ce cas d'annoncer la possibilité de rejoindre une conversation de groupe en multidiffusion entre les pompiers situés dans la localisation où un évènement a eu lieu, ou d'annoncer l'évènement seulement aux utilisateurs proches de la position de l'émetteur.

Concernant les services de vision ambiante de groupe ou encore d'écoute ambiante de groupe, la localisation comprise dans l'annonce de disponibilité de service est la localisation que l'émetteur a ciblée comme étant la zone qu'il souhaite voir ou écouter.

Dans une annonce de disponibilité de service comprenant une localisation, la localisation peut être ajoutée soit par l'émetteur soit par un équipement du réseau tel qu'un serveur.

La localisation comprise dans une annonce de disponibilité de service peut permettre de créer une zone de service. Par exemple, lorsqu'un équipement utilisateur entre dans cette zone, il peut être notifié d'un service disponible dans cette zone.

Cela peut être réalisé de plusieurs manières. Le système peut détecter qu'un équipement utilisateur est entré dans la zone et affilier automatiquement l'équipement utilisateur à un groupe dédié à la signalisation lié à cette zone. La façon dont le système détecte qu'un équipement utilisateur est entré dans la zone ne fait pas partie de l'objet de l'invention. Une fois affilié, l'équipement utilisateur peut recevoir l'annonce de disponibilité de service et utiliser le service annoncé. Ainsi, un groupe dédié à la signalisation est associé à une localisation.

Une autre manière peut être d'envoyer périodiquement l'annonce de disponibilité de service à une pluralité d'équipements utilisateurs affiliés à des groupes dédiés à la signalisation déjà existants. Chaque équipement utilisateur vérifie alors périodiquement s'il est dans la zone de l'annonce de disponibilité de service et peut alors utiliser le service s'il est dans la zone.

Un autre paramètre qui peut être compris dans une annonce de disponibilité de service est par exemple un paramètre de niveau dans la hiérarchie, par exemple des droits de l'utilisateur, ou un paramètre lié au service, par exemple de quantité de batterie de l'équipement utilisateur restante si le service est consommateur de batterie.

En cas de service persistent, c'est-à-dire de service étant utilisable durant un temps assez long, par exemple plusieurs heures ou plusieurs jours, les annonces de disponibilité de service peuvent être envoyées périodiquement, par exemple toutes les minutes ou toutes les heures. Cela permet à un équipement utilisateur s'étant affilié récemment à un groupe dédié à la signalisation de recevoir l'annonce de disponibilité de service même s'il n'a rejoint le groupe dédié à la signalisation qu'après la première émission de l'annonce.

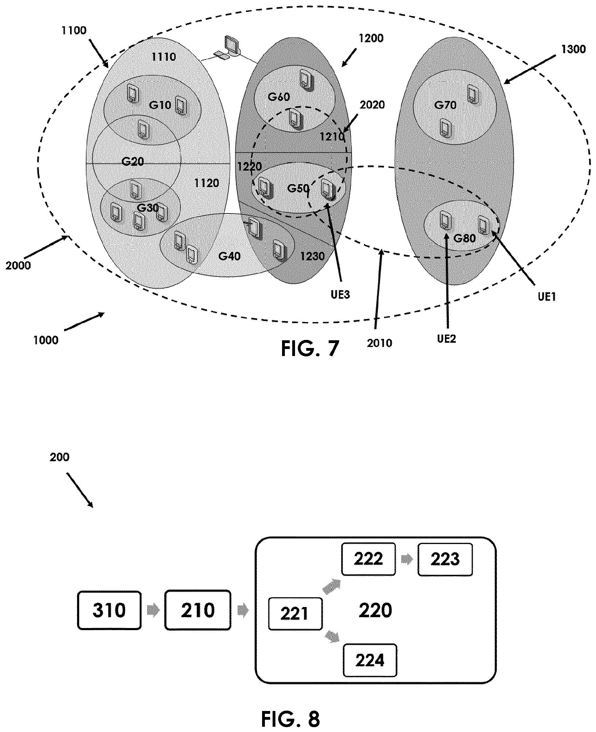

[Fig. 7] La figure 7 montre une représentation schématique d'un réseau de communication comprenant des groupes dédiés à la signalisation.

Dans la figure 7, un même équipement utilisateur UE3 est affilié à plusieurs groupes dédiés à la signalisation 2000, 2010 et 2020.

Tous les équipements utilisateurs du réseau de communication 1000 sont affilié au groupe dédié à la signalisation 2000. Ainsi, il est possible d'annoncer une disponibilité de service à tous les équipements utilisateurs du réseau de communication 1000.

Les équipements utilisateurs UE1, UE2 et UE3 sont affiliés au même groupe dédié à la signalisation 2010, permettant de leur annoncer une disponibilité de service alors même qu'ils ne sont pas tous dans les mêmes groupes de communication.

L'équipement utilisateur UE3 est en outre affilié au groupe dédié à la signalisation 2020, permettant de lui annoncer la disponibilité d'un service que les autres équipement utilisateurs UE1 et UE2 du groupe dédié à la signalisation 2010 ne sont pas autorisés à utiliser et/ou ne peuvent pas utiliser.

Cela permet de respecter des critères de confidentialité, en appartenant à plusieurs groupes dédiés à la signalisation ayant des niveaux de confidentialité des services annoncés différents, et en n'ayant pas de groupe de communication entre certains équipements utilisateurs, par exemple entre les équipements utilisateurs UE1 et UE3.

Ainsi, un avantage des groupes de signalisation est qu'ils permettent d'adresser une pluralité d'équipements utilisateurs et d'adresser un nombre restreint d'équipements utilisateurs en fonction du service annoncé et des besoins, et donc une granularité des annonces tout en évitant l'effet silo des groupes de communication et en respectant des critères de confidentialité.

### Suite de la description du troisième mode de réalisation de l'invention

Les deux noeuds n'ont pas besoin d'être affiliés au même groupe de communication ou au même groupe dédié à l'urgence. La session sélectionnée du groupe dédié à la signalisation est avantageusement une session établie entre les deux noeuds pendant toute leur durée de présence au sein du réseau. Ainsi, la surveillance de la connexion entre les deux noeuds par au moins un des deux noeuds est possible même avant qu'une session de communication ne soit établie entre eux.

Le procédé de surveillance 200 de la connexion entre deux noeuds selon le premier mode de réalisation comprend une deuxième étape 220 de surveillance de la connexion entre les deux noeuds.

Selon l'invention, pour chaque connexion entre deux noeuds surveillée, chacun des deux noeuds comprend en mémoire un même paramètre de période. Ainsi, comme représenté à la Figure 5, le serveur S1 et le client C1 comprennent en mémoire chacun le même paramètre de période P1 permettant la surveillance de la connexion entre le serveur S1 et le client C1. De la même manière, le serveur S1 et le serveur S2 comprennent en mémoire chacun le même paramètre de période P2 permettant la surveillance de la connexion entre le serveur S1 et le serveur S2. Le serveur S1 comprend ainsi en mémoire deux paramètres de période P1 et P2 permettant de surveiller respectivement les connexions avec le client C1 et avec le serveur S2. Les paramètres de période P1 et P2 peuvent être de valeurs égales ou différentes.

Le paramètre de période est utilisé lors de l'étape 220 du procédé de surveillance 200 selon l'invention. L'étape 220 comprend une pluralité de sous étapes 221 à 224.

L'étape de surveillance 220 de la connexion entre les deux noeuds comprend une première sous-étape 221 d'envoi périodique d'un message par le premier noeud au deuxième noeud via la session de surveillance précédemment sélectionnée à l'étape 210. La période d'envoi du message est définie par le paramètre de période en mémoire de chacun des deux noeuds dont la connexion est surveillée. La valeur du paramètre de période est une période, par exemple fixée à 1 seconde. Cela signifie qu'un message sera envoyé toutes les secondes.

Cette sous-étape 221 d'envoi périodique d'un message est effectuée par le noeud ne surveillant pas la connexion. Le noeud surveillant la connexion est destinataire des messages envoyés périodiquement par le noeud ne surveillant pas la connexion. Par exemple, dans un modèle client-serveur et dans le cas où l'un des deux noeuds est un serveur et où l'autre des deux noeuds est un client, le serveur peut être émetteur des messages périodiques, le client étant destinataire de ces messages. Dans ce mode de réalisation préférentiel, c'est le client qui surveille la connexion entre le client et le serveur, permettant au client de connaître l'état de la connexion entre lui et le serveur même si c'est le serveur qui initie la communication entre eux.

La connexion à surveiller peut être la connexion entre deux serveurs, par exemple entre un serveur ne contrôlant pas la session de surveillance et un serveur contrôlant la session de surveillance si le groupe dont une session est utilisée pour la surveillance est un groupe de communication, alors le serveur contrôlant ce groupe (appelé « Controlling Server ») est celui qui joue le rôle de serveur, l'autre serveur jouant le rôle de « client ». Dans le cas où le groupe dont une session est utilisée pour la surveillance est un groupe de signalisation, un des serveurs est élu pour être le « serveur » par exemple par configuration, l'autre jouant alors le rôle du « client ».

Dans le premier mode de réalisation où la session de surveillance sélectionnée est une session d'un groupe dédié à l'urgence établi en mode « messagerie », le message envoyé périodiquement est par exemple un message du protocole de contrôle de prise de parole. En effet, chaque noeud agissant comme serveur au sein d'un réseau respectant le standard 3GPP MCS comprend un module du protocole de contrôle de prise de parole, le module de contrôle de prise de parole étant configuré pour gérer la prise de parole lors d'une communication au sein d'un groupe multimédia auquel sont affiliés des équipements utilisateurs. Ainsi, dans le premier mode de réalisation où les deux noeuds dont la connexion est à surveiller sont affiliés à un même groupe dédié à l'urgence, le message envoyé périodiquement est un message du protocole de contrôle de la prise de parole, l'invention utilisant avantageusement un mécanisme déjà implémenté dans les réseaux 3GPP MCS existants.

Dans le deuxième mode de réalisation où la session de surveillance sélectionnée est une session d'un groupe de communication, le message envoyé périodiquement est aussi par exemple un message du protocole de contrôle de prise de parole.

Dans le troisième mode de réalisation où la session de surveillance sélectionnée est une session d'un groupe dédié à la signalisation, le message envoyé périodiquement est par exemple un message de signalisation.

Dans le cas où le deuxième noeud n'a pas reçu le message périodique dans la période définie par le paramètre de période, une sous-étape 222 de mise à jour d'un compteur de non-réception est réalisée. La sous-étape 222 est réalisée par le deuxième noeud, c'est-à-dire par le noeud destinataire du message émis périodiquement, c'est-à-dire le noeud surveillant la connexion. La sous-étape 222 comprend la mise à jour d'un compteur de non-réception, le compteur de non-réception étant en mémoire du deuxième noeud. La mise à jour du compteur de non-réception comprend par exemple son incrémentation. Par exemple, le compteur de non-réception est initialisé à une valeur de 0, et incrémenté de 1 à chaque fois qu'un message n'est pas reçu dans la période de temps définie par le paramètre de période commun aux deux noeuds.

Lorsque la valeur du compteur de non-réception est supérieure à la valeur d'un seuil de non-réception, une sous-étape 223 de détection d'une perte de connexion entre le premier noeud et le deuxième noeud est réalisée. Le seuil de non-réception est enregistré en mémoire du deuxième noeud destinataire des messages émis périodiquement. Ce seuil peut par exemple avoir une valeur de 15. Ainsi, lorsque la valeur du compteur de non-réception en mémoire du deuxième noeud dépasse ce seuil de non-réception, par exemple en ayant une valeur de 16, la sous-étape 223 de détection d'une perte de connexion entre le premier noeud et le deuxième noeud est réalisée.

Cette sous-étape 223 de détection d'une perte de connexion entre le premier noeud et le deuxième noeud comprend la détection d'une perte de connexion entre le premier noeud et le deuxième noeud, par exemple par la modification en mémoire du noeud détectant la perte de connexion, par exemple par le client dans le cas d'une surveillance de connexion client-serveur, d'un paramètre de perte de connexion, le paramètre de perte de connexion ayant par exemple une valeur de 0 lorsqu'aucune perte de connexion n'est détectée, et une valeur de 1 lorsqu'une perte de connexion est détectée, tant que la connexion n'est pas rétablie. Ce paramètre est réinitialisé lorsque la connexion est rétablie. La sous-étape 223 de détection d'une perte de connexion entre le premier noeud et le deuxième noeud peut comprendre en outre, lorsque le deuxième noeud est un équipement utilisateur, une annonce à un utilisateur du deuxième noeud la perte de connexion avec le premier noeud. Cette annonce peut comprendre par exemple l'affichage sur un écran du deuxième noeud de la perte de connexion avec le premier noeud, une annonce sonore émise par le deuxième noeud, une vibration du deuxième noeud, ou tout autre moyen d'annoncer la perte de connexion à l'utilisateur du deuxième noeud. Lorsque le deuxième noeud est un serveur, la sous-étape 223 de détection d'une perte de connexion entre le premier noeud et le deuxième noeud peut comprendre en outre une alarme envoyée vers le système de supervision du réseau.

Dans le cas où le deuxième noeud a bien reçu le message périodique dans la période définie par le paramètre de période, une sous-étape 224 de réinitialisation du compteur de non-réception est réalisée, le compteur de non-réception étant en mémoire du deuxième noeud. La sous-étape 224 est réalisée par le deuxième noeud, c'est-à-dire par le noeud destinataire du message émis périodiquement, c'est-à-dire le noeud surveillant la connexion. La sous-étape 224 de réinitialisation du compteur de non-réception comprend la réinitialisation du compteur de non-réception à une valeur initiale, par exemple à une valeur de 0, indiquant qu'un message périodique a été reçu.

[Fig. 8] La figure 8 montre une représentation schématique du procédé selon une variante de l'invention.

Dans la variante présentée à la Figure 8, le procédé 200 comprend une étape préliminaire 310 d'établissement d'une session de surveillance.

En effet, dans le cas où il est souhaité de surveiller la connexion entre deux noeuds mais qu'il n'est pas souhaité ou qu'il est impossible d'utiliser une session existante comme session de surveillance, il est possible d'établir une session de communication de groupe entre les deux noeuds qui sera alors sélectionnée à l'étape 210, devenant la session de surveillance. Cet établissement peut être réalisé par exemple par la création d'un groupe de communication et par l'affiliation implicite par le système gérant le réseau 100 des deux noeuds concernés au groupe de communication créé, en mode « messagerie » du standard 3GPP MCS. Il est aussi possible d'utiliser un groupe de communication existant et d'établir la session entre les deux noeuds.

## Revendications

1. Procédé de surveillance (200) de la connexion entre un premier noeud serveur (S1, S2) et un deuxième noeud client (C1) d'un réseau de communication (100) selon le standard 3GPP MCS, le procédé (200) comprend :
- Une étape préliminaire (310) d'établissement d'une session de communication de groupe en mode messagerie entre le premier noeud (S1, S2) et le deuxième noeud (C1),
- Une étape de sélection (210) de la session établie (A, B, C, D, E, F) entre le premier noeud serveur (S1, S2) et le deuxième noeud client (C1), la session établie sélectionnée devenant une session de surveillance,
- Une étape de surveillance (220) de la connexion entre le premier noeud serveur (S1, S2) et le deuxième noeud client (C1) par le deuxième noeud client (C1) via la session de surveillance comportant une sous-étape d'envoi périodique (221) d'un message par le premier noeud (S1, S2) au deuxième noeud (C1) via la session de surveillance.

2. Procédé de surveillance (200) selon la revendication précédente **caractérisé en ce que** l'étape de surveillance (220) de la connexion entre le premier noeud (S1, S2) et le deuxième noeud (C1) comprend :
∘Si le deuxième noeud (C1) n'a pas reçu le message dans la période définie par le paramètre de période :
• Une sous-étape (222) de mise à jour d'un compteur de non-réception du message par le deuxième noeud (C1),
• Si la valeur du compteur de non-réception est supérieure à la valeur d'un seuil de non-réception, une sous-étape (223) de détection d'une perte de connexion entre le premier noeud (S1, S2) et le deuxième noeud (C1),
• Si le deuxième noeud (C1) a reçu le message dans la période définie par le paramètre de période, une sous-étape (224) de réinitialisation du compteur de non-réception.

3. Procédé de surveillance (200) selon l'une quelconque des revendications précédentes **caractérisé en ce que** la session sélectionnée est une session de groupe dédié à l'urgence établi en mode messagerie et le message envoyé périodiquement est un message du protocole de contrôle de prise de parole.

4. Procédé de surveillance (200) selon l'une quelconque des revendications 1 à 3 **caractérisé en ce que** la session sélectionnée est une session de groupe dédié à la signalisation établi en mode messagerie et le message envoyé périodiquement est un message de signalisation.

5. Procédé de surveillance (200) selon l'une quelconque des revendications 1 ou 2 **caractérisé en ce que** le message envoyé périodiquement est un message du protocole de contrôle de prise de parole.

6. Procédé de surveillance (200) selon la revendication 1 **caractérisé en ce que**, lorsque le groupe de communication établi entre le premier noeud (S1, S2) et le deuxième noeud (C1) dont une session a été sélectionnée comme session de surveillance est désaffilié ou supprimé, l'étape de sélection (210) d'une session est répétée.

7. Procédé de surveillance (200) selon la revendication 2 **caractérisé en ce que**, lorsque le deuxième noeud (C1) a détecté la perte de connexion avec le premier noeud (S1, S2), le deuxième noeud (C1) envoie périodiquement un message d'enregistrement au premier noeud.

8. Procédé de surveillance (200) selon l'une quelconque des revendications 2 ou 7 **caractérisé en ce que**, lorsque la perte de connexion est détectée, le deuxième noeud (C1) annonce à un utilisateur du deuxième noeud (C1) la perte de connexion avec le premier noeud (S1, S2).

9. Procédé de surveillance (200) selon l'une quelconque des revendications 1 à 6 **caractérisé en ce que** le premier noeud (S1) est un serveur ne contrôlant pas la session de surveillance et le deuxième noeud (S2) est un serveur contrôlant la session de surveillance.

## Patentansprüche

1. Verfahren zur Überwachung (200) der Verbindung zwischen einem ersten Serverknoten (S1, S2) und einem zweiten Clientknoten (C1) eines Kommunikationsnetzes (100) gemäß dem 3GPP MCS-Standard, wobei das Verfahren (200) Folgendes umfasst:
- Einen vorbereitenden Schritt (310) zum Aufbau einer Gruppenkommunikationssitzung im Messaging-Modus zwischen dem ersten Knoten (S1, S2) und dem zweiten Knoten (C1),
- Einen Schritt zum Auswählen (210) der aufgebauten Sitzung (A, B, C, D, E, F) zwischen dem ersten Serverknoten (S1, S2) und dem zweiten Clientknoten (C1), wobei die ausgewählte aufgebaute Sitzung zu einer Überwachungssitzung wird,
- Einen Schritt zum Überwachen (220) der Verbindung zwischen dem ersten Serverknoten (S1, S2) und dem zweiten Clientknoten (C1) durch den zweiten Clientknoten (C1) über die Überwachungssitzung, die einen Unterschritt des periodischen Sendens (221) einer Nachricht vom ersten Knoten (S1, S2) an den zweiten Knoten (C1) über die Überwachungssitzung umfasst.

2. Überwachungsverfahren (200) nach dem vorhergehenden Anspruch, **dadurch gekennzeichnet, dass** der Schritt des Überwachens (220) der Verbindung zwischen dem ersten Knoten (S1, S2) und dem zweiten Knoten (C1) umfasst:
∘Wenn der zweite Knoten (C1) die Nachricht nicht innerhalb der Periode erhalten hat, die durch den Periodenparameter definiert ist:
• Einen Unterschritt (222) des Aktualisierens eines Zählers für den Nichtempfang der Nachricht durch den zweiten Knoten (C1),
• Wenn der Wert des Zählers für einen Nichtempfang größer ist als der Wert eines Grenzwerts für Nichtempfänge, wird in einem Unterschritt (223) ein Verlust der Verbindung zwischen dem ersten Knoten (S1, S2) und dem zweiten Knoten (C1) erkannt,
• Wenn der zweite Knoten (C1) die Nachricht innerhalb des durch den Periodenparameter festgelegten Zeitraums empfangen hat, folgt ein Unterschritt (224) zum Zurücksetzen des Zählers für den Nichtempfang.

3. Überwachungsverfahren (200) nach einem der vorhergehenden Ansprüche, **dadurch gekennzeichnet, dass** die ausgewählte Sitzung eine im Messaging-Modus aufgebaute, dem Notfall gewidmete Gruppensitzung ist und die periodisch gesendete Nachricht eine Nachricht des Protokolls zur Kontrolle der Wortmeldung ist.

4. Überwachungsverfahren (200) nach einem der Ansprüche 1 bis 3, **dadurch gekennzeichnet, dass** die ausgewählte Sitzung eine im Messaging-Modus aufgebaute, der Signalisierung gewidmete Gruppensitzung ist und die periodisch gesendete Nachricht eine Signalisierungsnachricht ist.

5. Überwachungsverfahren (200) nach Anspruch 1 oder 2, **dadurch gekennzeichnet, dass** die periodisch gesendete Nachricht eine Nachricht des Protokolls zur Kontrolle der Wortmeldung ist.

6. Überwachungsverfahren (200) nach Anspruch 1, **dadurch gekennzeichnet, dass**, wenn die zwischen dem ersten Knoten (S1, S2) und dem zweiten Knoten (C1) aufgebaute Kommunikationsgruppe, von der eine Sitzung als Überwachungssitzung ausgewählt wurde, abgemeldet oder gelöscht wird, der Schritt des Auswählens (210) einer Sitzung wiederholt wird.

7. Überwachungsverfahren (200) nach Anspruch 2, **dadurch gekennzeichnet, dass**, wenn der zweite Knoten (C1) den Verlust der Verbindung mit dem ersten Knoten (S1, S2) festgestellt hat, der zweite Knoten (C1) periodisch eine Registrierungsnachricht an den ersten Knoten sendet.

8. Überwachungsverfahren (200) nach einem der Ansprüche 2 oder 7, **dadurch gekennzeichnet, dass** der zweite Knoten (C1) bei Erkennung des Verbindungsverlusts einem Benutzer des zweiten Knotens (C1) den Verlust der Verbindung zum ersten Knoten (S1, S2) meldet.

9. Überwachungsverfahren (200) nach einem der Ansprüche 1 bis 6, **dadurch gekennzeichnet, dass** der erste Knoten (S1) ein Server ist, der die Überwachungssitzung nicht kontrolliert, und der zweite Knoten (S2) ein Server ist, der die Überwachungssitzung kontrolliert.

## Claims

1. Method (200) for monitoring the connection between a first node server (S1, S2) and a second node client (C1) of a communication network (100), the method (200) comprises:
- A preliminary step (310) of establishing a group communication session in messaging mode between the first node server (S1, S2) and the second node client (C1),
- A step (210) of selecting a session (A, B, C, D, E, F) established between the first node server (S1, S2) and the second node client (C1), the selected established session becoming a monitoring session,
- A step (220) of monitoring the connection between the first node server (S1, S2) and the second node client (C1) via the monitoring session comprising a sub-step of periodic sending of a message by the first node server (S1, S2) to the second node client (C1) via the monitoring session.

2. Monitoring method (200) according to the preceding claim **characterised in that** the step of monitoring the connection between the first node server (S1, S2) and the second node client (C1) comprises:
∘ If the second node client (C1) has not received the message within the period defined by the period parameter:
• A sub-step of updating a counter of non-reception of the message by the second node client (C1),
• If the value of the non-reception counter is greater than the value of a non-reception threshold, a sub-step of detecting a loss of connection between the first node server (S1, S2) and the second node client (C1),
• If the second node client (C1) has received the message within the period defined by the period parameter, a sub-step of re-setting the non-reception counter.

3. Monitoring method (200) according to any one of the preceding claims **characterised in that** the selected session is a dedicated emergency group session established in messaging mode and the message sent periodically is a floor control protocol message.

4. Monitoring method (200) according to any one of the claims 1 to 3 **characterised in that** the selected session is a dedicated signalling group session established in messaging mode and the message sent periodically is a signalling message.

5. Monitoring method (200) according to any one of claims 1 or 2 **characterised in that** the selected session is a session of the first communication group established in messaging mode between the first node server (S1, S2) and the second node client (C1) and the message sent periodically is a floor control protocol message.

6. Monitoring method (200) according to claim 1 **characterised in that**, when the communication group established between the first node server (S1, S2) and the second node client (C1) of which a session has been selected as monitoring session is withdrawn or deleted, the step of selecting a session is repeated.

7. Monitoring method (200) according to claim 2 **characterised in that**, when the second node client (C1) has detected a loss of connection with the first node server (S1, S2), the second node client (C1) periodically sends a registration message to the first node server (S1, S2).

8. Monitoring method (200) according to any one of claims 2 or 7 **characterised in that**, when a loss of connection is detected, the second node client (C1) announces to a user of the second node client (C1) the loss of connection with the first node server (S1, S2).

9. Monitoring method (200) according to any one of claims 1 to 6 **characterised in that** the first node (S1) is a server not controlling the monitoring session and the second node (S2) is a server controlling the monitoring session.
